(19) Europäisches Patentamt
European Patent Office
Office européen des brevets

(11) Veröffentlichungsnummer: **0 509 370 A1**

(12) **EUROPÄISCHE PATENTANMELDUNG**

(21) Anmeldenummer: **92105965.5**

(51) Int. Cl.[5]: **C08L 81/02**, C08K 5/00

(22) Anmeldetag: **07.04.92**

(30) Priorität: **19.04.91 DE 4112788**

(43) Veröffentlichungstag der Anmeldung:
**21.10.92 Patentblatt 92/43**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Wolf, Udo, Dr.**
**Uerdinger Strasse 469**
**W-4150 Krefeld(DE)**
Erfinder: **Köhler, Burkhard, Dr.**
**Mündelheimer Strasse 94**
**W-4150 Krefeld 11(DE)**
Erfinder: **Zembrod, Alfred, Dr.**
**Nittumer Weg 60**
**W-5060 Bergisch Gladbach 2(DE)**
Erfinder: **Kraft, Klaus, Dr.**
**Dörperhofstrasse 15**
**W-4150 Krefeld(DE)**
Erfinder: **Görner, Helmut, Dr.**
**Hermannstrasse 103**
**W-4330 Mülheim(DE)**

# (54) Farbstabilisierte Polyarylensulfidmischung.

(57) Die Erfindung betrifft eine Mischung von PPS und Kolophonium, die ein verbessertes Färbungsverhalten bei der Verarbeitung bei hohen Temperaturen aufweist.

EP 0 509 370 A1

Die Erfindung betrifft eine Mischung mit Polyarylensulfid, vorzugsweise Polyphenylensulfid, mit farbstabilisierender Wirkung.

Polyphenylensulfid (PPS) fällt unmittelbar nach der Produktion als farblose Substanz an. Beim Erhitzen in Luft verfärbt sich PPS bräunlich. Dieser Effekt tritt insbesondere bei der Verarbeitung von PPS mit Maschinen auf, bei deren Anwendung ein Temperaturanstieg im bearbeiteten Material auftritt. Unter diese Art von Geräten fallen beispielsweise die Granulierschnecken, mit denen das PPS in eine handelsübliche Form gebracht wird.

Es bestand daher die Aufgabe, Polyarylensulfide vor unerwünschter Verfärbung zu schützen.

Die Aufgabe wird dadurch gelöst, daß Polyarylensulfid mit Kolophonium, einem Harz, gemischt wird.

Dieses Verfahren eignet sich insbesondere zur Herstellung farbstabilisierten Polyphenylensulfides in linearer oder verzweigter Form, wie es beispielsweise aus US-3 354 129 oder EP-A-171 021 bekannt ist, Kolophonium enthält im wesentlichen Harzsäuren, insbesondere Abietinsäure und ihre Isomere. Diese Säuren gehören zu den tricyclischen $C_{20}$-Säuren.

Ohne Berücksichtigung von weiteren Füll- oder Verstärkungsstoffen besteht die Mischung vorzugsweise aus 80 bis 99,98 %, besonders bevorzugt aus 90 bis 99,8 % Polyarylensulfid, bevorzugt Polyphenylensulfid, und 0,02 bis 20 %, besonders bevorzugt 0,2 bis 10 % Säuren der Formel

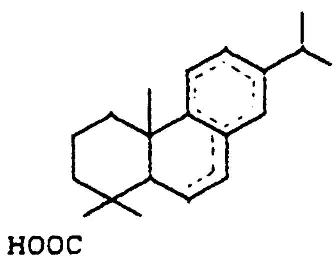

wobei in dem durch gestrichelte Linien gekennzeichneten Bereich mindestens ein konjungiertes Doppelbindungssystem vorhanden ist, oder deren Ester, Salze oder Amide.

Die Mengenangaben sind unabhängig von weiteren Füll- oder Verstärkungsstotfen. Diese lassen sich von 0-300 Gewichtsteilen auf 100 Gewichtsteile der oben beschriebenen Mischung zugeben. Um ein farbstabilisiertes PPS zu erhalten, werden die oben genannten Harzsäuren bzw. Gemische aus ihnen bevorzugt nach Ablauf der eigentlichen Produktionsreaktion zugegeben. Insbesondere wird der Zusatz beim Pressen oder Kompaktieren des Polyphenylensulfids unmittelbar vor dem eigentlichen Granulierschritt zugegeben.

Die Erfindung wird im folgenden anhand der Zeichnung und mit Hilfe eines Beispieles und eines Vergleichsbeispieles näher erläutert.

Es zeigen

Fig. 1 UV/VIS-Absorption von PPS mit Kolophonium

Fig. 2 UV/VIS-Absorption von PPS mit Irganox® (Vergleichsbeispiel

In eine vorgegebene Menge PPS werden mit Hilfe einer Knetmaschine die einzumischenden Substanzen eingearbeitet. Zur Aufnahme der Absorptionsspektren im Wellenlängenbereich von 350-700 nm wurde Kolophonium in Konzentrationen von 0 % (Spektrum 1), 0,5 % (Spektrum 2) und 2 % (Spektrum 3), bezogen auf die Masse PPS, bei einer Temperatur von 285 ° C und einer Verarbeitungsdauer von 5 min eingemischt. Als Vergleichsbeispiel wurden 0 % (Spektrum 21), 0,5 % (Spektrum 22) und 2 % (Spektrum 23) eines handelsüblichen Antioxidationsmittels (Irganox®) auf der Basis von Dibutylhydroxyphenylpropionsäureester auf identische Weise mit PPS gemischt. Für die spektroskopischen Messungen wurden aus allen Materialien ca. 100 µm Dicke transparente Filme bei einer Preßtemperatur von 280 ° C und einer Preßdauer von 3 min. hergestellt.

Während der Zusatz von Irganox® zu einer Erhöhung der Absorption führt, die visuell als Verbräunung wahrnehmbar ist, zeigt die PPS-Mischung mit Kolophonium eine geringere Absorption des Produktes nach der Verarbeitung. Dies führt zu einem signifikant helleren Produkt.

## Patentansprüche

**1.** Mischung aus

a) 80 - 99,98 % Polyarylensulfid und

b) 0,02 - 20 % einer Säure oder eines Gemische von Säuren der Formel

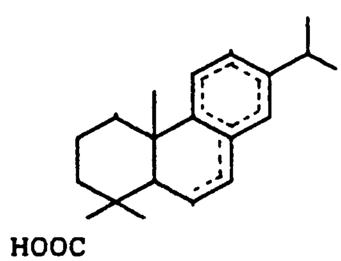

wobei in dem mit gestrichelten Linien gekennzeichneten Bereich mindestens ein konjungiertes Doppelbindungssystem vorhanden ist, oder deren Ester, Salze oder Amide.

**2.** Mischung nach Anspruch 1, bestehend aus 100 Gewichtsteilen der Mischung von a) und b) und 0 bis 300 Gewichtsteilen von Füll- oder

Verstärkungsstoffen.

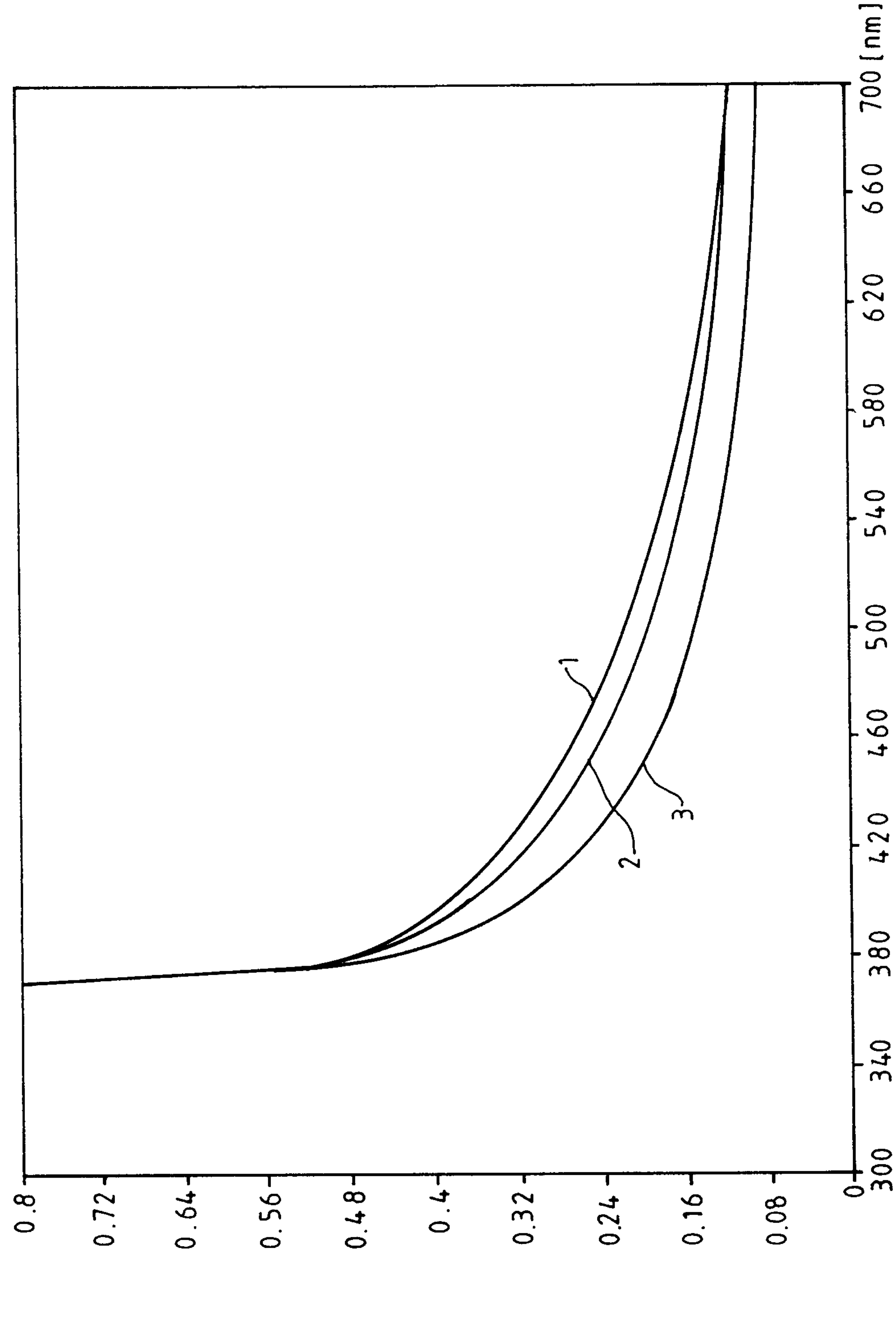
0.8
0.72
0.64
0.56
0.48
0.4
0.32
0.24
0.16
0.08
0
300
340
380
420
460
500
540
580
620
660
700 [nm]
1
2
3

FIG.1

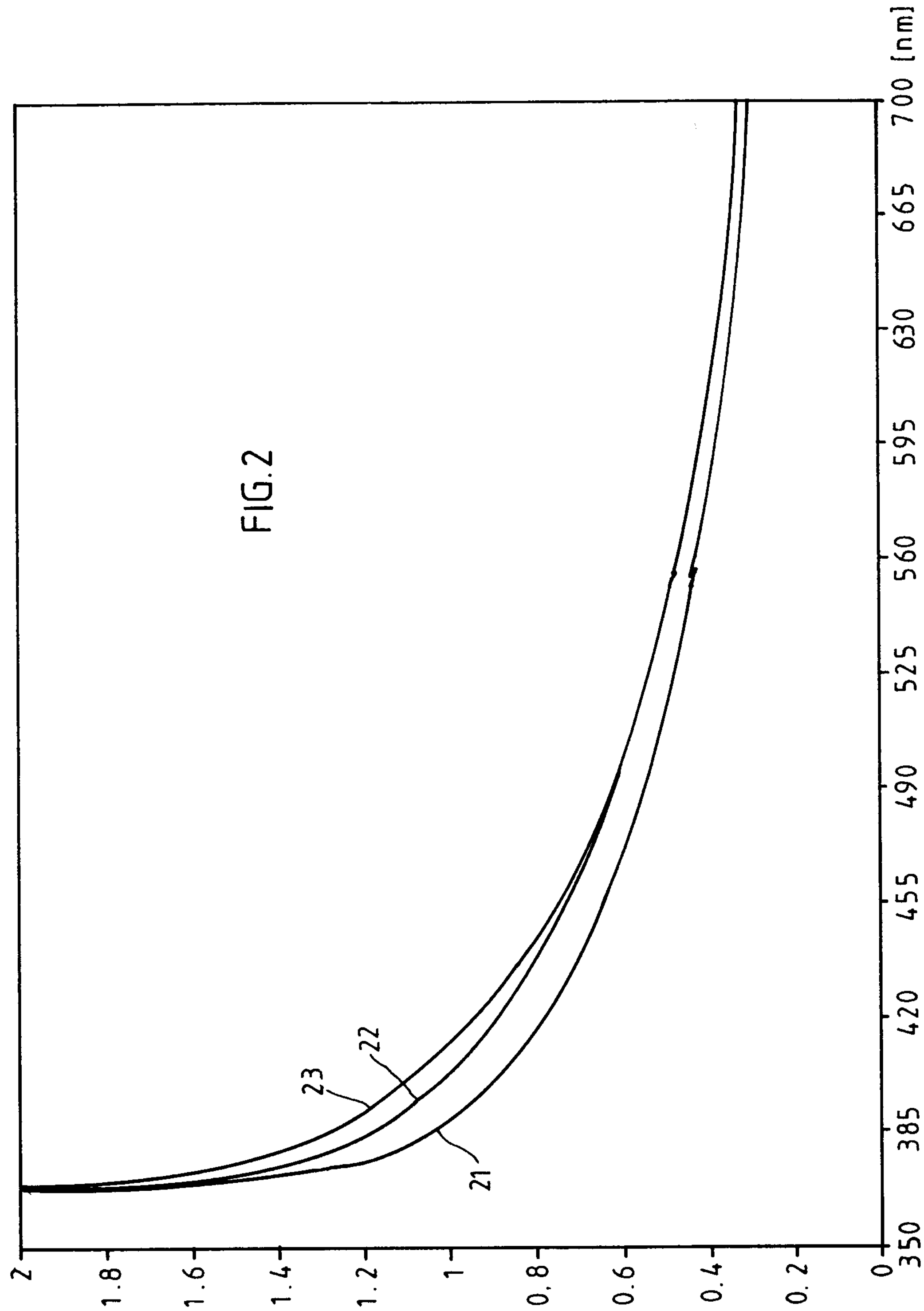
2
1.8
1.6
1.4
1.2
1
0.8
0.6
0.4
0.2
0
350
385
420
455
490
525
560
595
630
665
700 [nm]
21
22
23

FIG.2

Europäisches Patentamt

# EUROPÄISCHER RECHERCHENBERICHT

Nummer der Anmeldung

EP 92 10 5965

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 193 951 (KUREHA KAGAKU KOGYO KABUSHIKI KAISHA) * Seite 7, Zeile 33 - Seite 9, Zeile 37; Anspruch 1 * | 1,2 | C08L81/02 C08K5/00 |
| P,A | WORLD PATENTS INDEX LATEST Derwent Publications Ltd., London, GB; AN 92-093982 & JP-A-4 039 387 (SUMITOMO ELEC IND) 10. Februar 1992 * Zusammenfassung * | 1,2 | |
| A | WORLD PATENTS INDEX LATEST Derwent Publications Ltd., London, GB; AN 83-804376 & JP-A-58 160 343 (NIPPON ESTER) 22. September 1983 * Zusammenfassung * | 1,2 | |
| A | EP-A-0 140 370 (PHILLIPS PETROLEUM COMPANY) * Ansprüche 1-3,5-7,12,13; Beispiel 2 * | 1,2 | **RECHERCHIERTE SACHGEBIETE (Int. Cl.5 )** |
| A | WO-A-8 202 396 (AKTIEBOLGET CELLOPLAST) * Seite 2, Zeile 32 - Zeile 33; Ansprüche 1,4,7,9 * | 2 | C08L C08K |

Der vorliegende Recherchenbericht wurde für alle Patentansprüche erstellt

| Recherchenort | Abschlußdatum der Recherche | Prüfer |
|---|---|---|
| DEN HAAG | 03 JULI 1992 | KLIER E.K. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument